# FASCICULE DE BREVET EUROPEEN

(11) **EP 1 104 997 B1**
(45) Date de publication et mention de la délivrance du brevet: **09.08.2006**
(21) Numéro de dépôt: 00940449.2
(22) Date de dépôt: 07.06.2000
(51) Int. Cl.: A23G 3/00, A23L 1/06, A23L 1/0526, A23L 1/0532, A23L 1/054

(54) **SUCRE GELIFIANT POUR LA PREPARATION DE CONFITURES**
GELIERZUCKER ZUR HERSTELLUNG VON MARMELADEN
GEL-FORMING SUGAR FOR PREPARING JAM

(30) Priorité: 23.06.1999 FR 9907995
(43) Date de publication de la demande: 13.06.2001
(73) Titulaire: TEREOS, 02390 Origny Sainte Benoite (FR); Quellier, Isabelle, 68370 Orbey (FR); Vanneste, Hélène, 1040 Bruxelles (BE)
(72) Inventeur: QUELLIER, Isabelle, F-68370 Orbey (FR); VANNESTE, Hélène, B-1040 Bruxelles (BE)
(74) Mandataire: Grosset-Fournier, Chantal Catherine
(86) Numéro de dépôt international: PCT/FR2000/001555
(87) Numéro de publication internationale: WO 2001/000040

(56) Documents cités:
- EP-A- 0 602 991
- US-A- 3 892 871
- PATENT ABSTRACTS OF JAPAN vol. 006, no. 174 (C-123), 8 septembre 1982 (1982-09-08) & JP 57 091150 A (Q P CORP), 7 juin 1982 (1982-06-07)

## Description

La présente invention a pour objet un sucre gélifiant pour la préparation de confitures, notamment de confitures ménagères.

Les sucres gélifiants actuels pour confitures comprennent un mélange de saccharose, de pectine et d'acide citrique.

La présence d'acide citrique est indispensable dans ce type de formulation, dans la mesure où la gélification de la pectine est dépendante du pH et que la zone de gélification optimale se situe à un pH compris entre 2,8 et 3,2.

Cette caractéristique a plusieurs conséquences négatives sur les sucres gélifiants actuels pour confitures.

En effet, le pH de la plupart des fruits étant généralement compris entre 3,3 et 3,6, il est nécessaire, pour amener le pH des confitures dans la zone de gélification optimale de la pectine (2,8 à 3,2), d'ajouter l'acide citrique dans le sucre gélifiant en quantités telles qu'elles confèrent un goût acide très fort et persistant à la confiture. Compte tenu de l'utilisation généralisée du sucre gélifiant pour confitures, cette note acide est prépondérante sur le goût des fruits, et notamment pour des fruits déjà acides tels que les framboises, les fraises, l'ananas etc...

De plus, pour des fruits peu acides tels que la cerise, la pêche (pH ≥ 4), la quantité d'acide à ajouter dans le sucre gélifiant peut ne pas être suffisante pour porter le pH de la confiture dans la zone de gélification optimale de la pectine, et les confitures manquent de gélification. Cet inconvénient peut être lissé par une adaptation du mode d'emploi qui nécessite alors d'augmenter le rapport sucre/fruits pour faciliter la gélification. Dans ce cas, le goût sucré devient prépondérant sur le goût des fruits. De plus, il est nécessaire d'adapter le mode d'emploi en fonction du type de fruit utilisé pour la préparation de la confiture.

Par ailleurs, la gélification de la pectine est aussi dépendante de la matière sèche de la confiture. Cette caractéristique nécessite également une adaptation du mode d'emploi qui préconise alors d'augmenter le rapport sucre/fruits pour faciliter la gélification, avec les inconvénients cités ci-dessus. Pour certains fruits riches en eau (tels que les fraises en début de saison), cette adaptation n'est pas suffisante pour permettre une bonne gélification.

Le type de formulation de sucres gélifiants pour confitures décrit ci-dessus donne des résultats satisfaisants avec du sucre blanc pour la plupart des fruits. Par contre, la substitution du sucre blanc par du sucre roux de canne peut entraîner une perte de gélification de la pectine importante (30%), ladite perte étant liée à la présence de sels tampons dans les sucres roux, qui gêne alors la gélification.

La présente invention a pour but de fournir des sucres gélifiants pour la préparation de confitures présentant une gélification satisfaisante, et préparées notamment à partir de sucres roux de canne.

Elle a également pour but de fournir des sucres gélifiants pour la préparation de confitures présentant une gélification satisfaisante quel que soit le type de fruits utilisés, et notamment les fruits peu acides ou riches en eau.

L'invention a encore pour but de fournir des sucres gélifiants pour la préparation de confitures, permettant une réussite desdites confitures après un temps de cuisson relativement court, et un mode d'emploi unique et facile d'utilisation, quel que soit le type de fruit utilisé.

Un autre but de la présente invention est de fournir des sucres gélifiants pour la préparation de confitures, notamment de confitures à base de fruits acides, ne présentant pas de goût acide prononcé.

La présente invention a principalement pour objet l'utilisation d'un mélange pulvérulent comprenant :
- du sucre choisi dans le groupe constitué par le saccharose, le fructose ou leurs mélanges,
- un agent gélifiant choisi dans le groupe constitué par les carraghénanes, les xanthanes, la gomme guar ou leurs mélanges,
- et éventuellement un agent épaississant tel que la farine de graine de caroube,
pour la préparation d'un sucre gélifiant.

Par l'expression « agent gélifiant », il faut entendre une substance qui, ajoutée à une denrée alimentaire, lui confère de la consistance par la formation d'un gel.

Par l'expression « agent épaississant », il faut entendre une substance qui, ajoutée à une denrée alimentaire, en augmente la viscosité.

Le saccharose est un disaccharide constitué de glucose et de fructose. De façon avantageuse, le saccharose et/ou le fructose utilisés dans le cadre de la présente invention présentent chacun des granulométries dont l'ouverture moyenne varie d'environ 50 µm à environ 2 mm.

Les carraghénanes, les xanthanes et la gomme guar sont des polysaccharides de haut poids moléculaire.

Les carraghénanes comportent dans leur structure une chaîne de β-D-galactoses partiellement sulfatés. Avantageusement, les carraghénanes utilisés dans le cadre de la présente invention sont plus particulièrement un mélange de kappa et de iota carraghénanes, disponibles commercialement.

Les xanthanes sont des hétéropolysaccharides de haut poids moléculaire dont la chaîne principale est constituée de β-D-glucose avec des ramifications comportant d'autres sucres. Les xanthanes utilisés dans le cadre de la présente invention sont disponibles commercialement.

La gomme guar comporte dans sa structure une unité de galactose pour 2 résidus de mannose. La gomme utilisée dans le cadre de la présente invention est disponible commercialement.

Selon un mode de réalisation avantageux, le mélange pulvérulent de l'invention comprend :
- du sucre choisi dans le groupe constitué par le saccharose, le fructose ou leurs mélanges,
- un agent gélifiant choisi dans le groupe constitué par les carraghénanes, les xanthanes, la gomme guar ou leurs mélanges.

Selon un autre mode de réalisation avantageux, le mélange pulvérulent selon l'invention est caractérisé en ce que le saccharose est choisi dans le groupe constitué par le sucre blanc, le sucre roux de canne ou leurs mélanges.

Par « sucre blanc » on désigne le saccharose purifié et cristallisé, et correspondant aux caractéristiques de la Directive CEE n° 73/437.

Par « sucre roux de canne » on désigne du sucre brut de canne, non raffiné ou partiellement raffiné, dont la teneur en saccharose est comprise entre 85% et 98%.

Selon un autre mode de réalisation avantageux, le mélange pulvérulent selon l'invention est caractérisé en ce qu'il comprend en outre un agent épaississant tel que la farine de graine de caroube.

La farine de graine de caroube est un polysaccharide de haut poids moléculaire, et sa structure comporte 1 unité de galactose pour 4 résidus de mannose. La farine de graine de caroube utilisée dans la cadre de la présente invention est disponible commercialement.

De façon avantageuse, la combinaison de l'agent gélifiant tel que la farine de graine de caroube, avec l'agent épaississant tels que les carraghénanes et/ou les xanthanes et/ou la gomme guar, et avec le sucre tel que le saccharose et/ou le fructose, permet d'obtenir un mélange pulvérulent particulièrement avantageux pour la préparation d'un sucre gélifiant pour confitures.

Selon un mode de réalisation avantageux, le mélange pulvérulent selon l'invention est plus particulièrement caractérisé en ce que la quantité de sucre varie d'environ 95% à environ 99,8% en poids par rapport au poids total du mélange, et est notamment d'environ 99% en poids, et en ce que la quantité d'agent gélifiant et éventuellement d'agent épaississant, varie d'environ 0,2% à environ 5% en poids par rapport au poids total du mélange, et varie avantageusement d'environ 0,2% à environ 2% et, est notamment d'environ 1 % en poids.

Si la quantité d'agent gélifiant, et éventuellement d'agent épaississant, est supérieure à 5%, la gélification devient très importante et conduit à un produit dont la consistance est trop ferme.

Si la quantité d'agent gélifiant, et éventuellement d'agent épaississant est inférieure à 0,2%, la gélification est alors trop faible et conduit à un produit presque liquide.

Selon un autre mode de réalisation avantageux, le mélange pulvérulent selon l'invention est plus particulièrement caractérisé en ce que la quantité d'agent gélifiant varie d'environ 30% à environ 100% en poids par rapport au poids total de l'agent gélifiant et de l'agent épaississant, et est notamment d'environ 80% en poids, et en ce que la quantité d'agent épaississant varie de 0% à environ 70% en poids par rapport au poids total de l'agent gélifiant et de l'agent épaississant, et est notamment d'environ 20% en poids.

Si la quantité d'agent épaississant est supérieure à 70%, on obtient alors une confiture pâteuse.

La présente invention concerne encore un sucre gélifiant caractérisé en ce qu'il comprend un mélange pulvérulent tel que défini ci-dessus.

La présente invention concerne également l'utilisation du sucre gélifiant tel que défini ci-dessus, pour la préparation de confitures, gelées ou marmelades.

Par l'expression « confitures », il faut comprendre le mélange porté à la consistance gélifiée appropriée, de sucres et de pulpes et/ou de purées de fruits.

Par l'expression « gelées », il faut comprendre le mélange, suffisamment gélifié, de sucres et de jus et/ou d'extraits aqueux de fruits.

Par l'expression « marmelades », il faut comprendre le mélange, porté à la consistance gélifiée appropriée, de sucres et d'un ou plusieurs des produits ci-après : pulpes, purées, jus, extraits aqueux et écorces, obtenus à partir d'agrumes.

De façon avantageuse, les sucres gélifiants selon l'invention sont particulièrement appropriés pour la préparation de confitures, gelées ou marmelades ménagères, c'est-à-dire de confitures, gelées ou marmelades préparées de façon artisanale.

L'invention a également pour objet une confiture, gelée ou marmelade caractérisée en ce qu'elle comporte du sucre gélifiant tel que défini ci-dessus, et présente une viscosité inférieure à environ 6 cm/ 30 secondes, et variant notamment d'environ 3 à environ 6 cm/ 30 secondes, ladite viscosité étant mesurée à l'aide d'un appareil Bostwick.

L'appareil Bostwick est un appareil permettant de mesurer la viscosité d'un produit non homogène, contenant par exemple des morceaux. L'appareil Bostwick comprend une surface plane pouvant former un plan incliné, dont l'angle varie de 0 à environ 10 degrés, et est notamment d'environ 5 degrés, avec un réceptacle formé de trois parois fixes perpendiculaires à la surface plane et d'une paroi mobile pouvant coulisser perpendiculairement à la surface plane. Au delà du réceptacle, la surface plane est graduée.

Le principe dudit appareil consiste à mettre de la confiture, gelée ou marmelade selon l'invention (92 ml) dans le réceptacle, à ouvrir la paroi mobile ce qui permet à la confiture de s'écouler sur le plan incliné.

La mesure consiste à mesurer la distance parcourue en 30 secondes après ouverture de la paroi mobile.

L'invention a encore pour objet une confiture, gelée ou marmelade telle que définie ci-dessus, caractérisée en ce qu'elle comporte du sucre gélifiant tel que défini ci-dessus, et des fruits, le rapport en poids entre lesdits fruits et ledit sucre gélifiant étant d'environ 1,4 à environ 0,7, et notamment d'environ 1.

La présence d'acide ne perturbe pas la gélification, et l'ajout d'un exhausteur de goût (comme par exemple le jus de citron) peut tout à fait être envisagé pour certains fruits.

La non-dépendance de la présence d'acide dans les confitures selon l'invention va également permettre une gélification de la confiture avec tous les types de fruits, quelle que soit leur acidité.

De plus, la substitution du sucre blanc par des sucres roux de canne améliore la gélification des confitures par un apport de cations.

Par ailleurs, le choix de l'agent gélifiant (carraghénanes et/ou xanthanes et/ou gomme guar) et éventuellement de l'agent épaississant (farine de graine de caroube) utilisé(s) dans la formulation du mélange pulvérulent selon l'invention, permet également d'obtenir une gélification des confitures dans une zone de matières sèches plus large, supérieure ou égale à environ 55%, ce qui permet de limiter les conseils d'utilisation à un seul mode d'emploi pour tous les fruits.

Selon un mode de réalisation avantageux, le procédé de préparation d'une confiture, gelée ou marmelade selon l'invention, consiste à :
(a) additionner des fruits à du sucre gélifiant tel que défini ci-dessus,
(b) chauffer jusqu'à ébullition le mélange obtenu à l'issue de l'étape a), et laisser cuire ledit mélange pendant une durée variant d'environ 5 à environ 10 minutes après le début de l'ébullition pour obtenir une confiture, gelée ou marmelade.

Selon un mode de réalisation avantageux de l'invention, on pourra :
- additionner 1 kg de fruits à 1 kg de sucre gélifiant,
- chauffer jusqu'à ébullition le mélange obtenu à l'issue de l'étape précédente, et laisser cuire ledit mélange pendant une durée de 5 minutes après le début de l'ébullition.

Selon un autre mode de réalisation avantageux de l'invention, si la ménagère souhaite obtenir une confiture plus fruitée, on pourra :
- additionner 1,2 kg de fruits à 1 kg de sucre gélifiant,
- chauffer jusqu'à ébullition le mélange obtenu à l'issue de l'étape précédente, et laisser cuire ledit mélange pendant une durée de 7 minutes après le début de l'ébullition.

Lors de la confection des confitures, gelées ou marmelades selon l'invention, il conviendra de :
- préparer préalablement les fruits (lavage, équeutage, dénoyautage etc...),
- bien remuer le mélange formé entre les fruits et le sucre gélifiant,
- de chauffer à feu vif et de porter à ébullition ledit mélange,
- de laisser cuire après le début de l'ébullition tout en continuant à remuer,
- d'écumer et de remplir les pots à chaud.

En résumé, les avantages de la nouvelle formulation du sucre gélifiant selon l'invention, et donc des confitures, gelées ou marmelades selon l'invention sont :
- la non nécessité de l'ajout d'acide citrique, ce qui permet de conserver le goût du fruit desdites confitures,
- une gélification satisfaisante avec tous les types de fruits, et avec un mode d'emploi unique,
- la possibilité de réaliser des confitures avec des sucres roux de canne.

Les exemples ci-dessous illustrent l'invention ; ils ne la limitent en aucune façon.

### EXEMPLES

Dans les exemples 1 et 2 ci-après, le pourcentage de matière sèche, le pH, la gélification et la viscosité des confitures selon l'invention sont comparés à ceux d'une confiture fabriquée avec un sucre gélifiant traditionnel.

### Exemple 1

### Préparation de confitures selon l'invention avec un fruit rouge : la cerise.

La cerise est un fruit peu acide et pauvre en pectine. Ainsi, les confitures actuelles de cerises ont du mal à gélifier et se présentent plus sous forme de cerises dans un sirop peu visqueux.

Les confitures de l'invention sont préparées selon le procédé décrit ci-dessus, et les confitures fabriquées avec un sucre gélifiant traditionnel sont préparées selon les procédés précisés dans le mode d'emploi.
1) Composition des confitures
- Confiture de cerise fabriquée avec un sucre gélifiant traditionnel
   a) Formulation du sucre gélifiant traditionnel :
      - 986 g de sucre blanc,
      - 7 g de pectine et,
      - 7 g d'acide citrique,
   b) 1 kg de cerises.
   Durée du temps de cuisson : 5 minutes.
- Confiture de cerise selon l'invention à base de sucre blanc
   a) Formulation du sucre gélifiant selon l'invention:
      - 990 g de sucre blanc,
      - 8 g de carraghénanes et,
      - 2 g de farine de graine de caroube,
   b) 1 kg de cerises.
   Durée du temps de cuisson : 5 minutes.
- Confiture de cerise selon l'invention à base de sucre roux de canne
   a) Formulation du sucre gélifiant selon l'invention :
      - 990 g de sucre roux de canne,
      - 8 g de carraghénanes et,
      - 2 g de farine de graine de caroube,
   b) 1 kg de cerises.
   Durée du temps de cuisson : 5 minutes.

2) Les différents résultats obtenus sont décrits dans le tableau 1 suivant :

| | Confiture avec sucre gélifiant traditionnel | Confiture selon l'invention à base de sucre blanc de sucre blanc | Confiture selon l'invention à base de sucre roux de canne |
|---|---|---|---|
| % Matière sèche | 68% | 68.5 % | 68,5% |
| pH | 3.4 | 3.9 | 4.0 |
| Gélification | Mauvaise gélification | Confiture gélifiée et tartinable** | Confiture gélifiée et tartinable |
| Mesure Bostwick* Temps : 30 s | 8 cm | 4.5 cm | 3.75 cm |

| | | | |
|---|---|---|---|
| *Bostwick : Appareil de mesure de la viscosité fabriqué par CSC SCIENTIFIC, dont l'angle d'inclinaison est d'une valeur d'environ 5 degrés. | | | |
| ** Par « tartinable », il faut comprendre que les confitures selon l'invention sont faciles à étaler ou à mélanger avec un autre produit. | | | |

### Exemple 2

### Préparation de confitures selon l'invention avec un fruit jaune : l'ananas.

**L'ananas est un fruit relativement acide et pauvre en pectine.**
1) Composition des confitures
- Confiture d'ananas fabriquée avec un sucre gélifiant traditionnel
   a) Formulation du sucre gélifiant traditionnel :
      - 986 g de sucre blanc,
      - 7 g de pectine et,
      - 7 g d'acide citrique,
   b) 1 kg d'ananas.
   Durée du temps de cuisson : 5 minutes.
- Confiture d'ananas selon l'invention à base de sucre blanc
   a) Formulation du sucre gélifiant selon l'invention :
      - 990 g de sucre blanc,
      - 8 g de carraghénanes et,
      - 2 g de farine de graine de caroube,
   b) 1 kg d'ananas.
   Durée du temps de cuisson : 5 minutes.
- Confiture d'ananas selon l'invention à base de sucre roux de canne
   a) Formulation du sucre gélifiant selon l'invention :
      - 990 g de sucre roux de canne,
      - 8 g de carraghénanes et,
      - 2 g de farine de graine de caroube,
   b) 1 kg d'ananas.
   Durée du temps de cuisson : 5 minutes.

2) Les différents résultats obtenus sont décrits dans le tableau 2 suivant :

| | Confiture avec sucre gélifiant traditionnel | Confiture selon l'invention avec sucre blanc | Confiture selon l'invention avec sucre roux de canne |
|---|---|---|---|
| % Matière sèche | 60.5 % | 60.8 % | 61.5 % 61.5 % |
| pH | 3.0 3.0 | 3.5 3.5 | 3.4 |
| Gélification | Mauvaise gélification | Confiture gélifiée et tartinable | Confiture gélifiée et tartinable |
| Mesure Mesure Bostwick Temps : 30 s | 11 cm | 5 cm 5 cm | 3.5 cm 3.5 cm |

### Conclusion

Les exemples 1 et 2 ci-dessus démontrent qu'il est possible, selon l'invention, d'obtenir des confitures avec du sucre roux de tout aussi bonne qualité que celles obtenues à base de sucre blanc, lesdites confitures présentant de nombreux avantages par rapport aux confitures fabriquées avec un sucre gélifiant traditionnel.

## Revendications

1. Utilisation d'un mélange pulvérulent comprenant :
- du sucre choisi dans le groupe constitué par le saccharose, le fructose ou leurs mélanges,
- un agent gélifiant choisi dans le groupe constitué par les carraghénanes, les xanthanes, la gomme guar ou leurs mélanges,
- et éventuellement un agent épaississant tel que la farine de graine de caroube, pour la préparation d'un sucre gélifiant, pour confitures, gelées ou marmelades.

2. Utilisation d'un mélange pulvérulent selon la revendication 1, **caractérisé en ce qu'**il comprend :
- du sucre choisi dans le groupe constitué par le saccharose, le fructose ou leurs mélanges,
- un agent gélifiant choisi dans le groupe constitué par les carraghénanes, les xanthanes, la gomme guar ou leurs mélanges.

3. Utilisation d'un mélange pulvérulent selon la revendication 1 ou la revendication 2, **caractérisé en ce que** le saccharose est choisi dans le groupe constitué par le sucre blanc, le sucre roux de canne ou leurs mélanges.

4. Utilisation selon l'une quelconque des revendications 1 à 3, **caractérisée en ce que** le mélange pulvérulent comprend en outre un agent épaississant tel que la farine de graine de caroube.

5. Mélange pulvérulent, **caractérisé en ce qu'**il comprend :
- du sucre choisi dans le groupe constitué par le saccharose, le fructose ou leurs mélanges,
- un agent gélifiant choisi dans le groupe constitué par les carraghénanes, les xanthanes, la gomme guar ou leurs mélanges,
- un agent épaississant tel que la farine de graine de caroube,
et dans lequel la quantité de sucre varie d'environ 95% à environ 99,8% en poids par rapport au poids total du mélange, et est notamment d'environ 99% en poids, et **en ce que** la quantité d'agent gélifiant et éventuellement d'agent épaississant, varie d'environ 0,2% à environ 5% en poids par rapport au poids total du mélange, et varie avantageusement d'environ 0,2% à environ 2%, et est notamment d'environ 1% en poids.

6. Mélange pulvérulent selon la revendication 5, **caractérisé en ce que** le saccharose est choisi dans le groupe constitué par le sucre blanc, le sucre roux de canne ou leurs mélanges.

7. Mélange pulvérulent selon l'une quelconque des revendications 5 ou 6, **caractérisé en ce que** la quantité d'agent gélifiant varie d'environ 30% à environ 100% en poids par rapport au poids total de l'agent gélifiant et de l'agent épaississant, et est notamment d'environ 80% en poids, et **en ce que** la quantité d'agent épaississant varie de 0% à environ 70% en poids par rapport au poids total de l'agent gélifiant et de l'agent épaississant, et est notamment d'environ 20% en poids.

8. Sucre gélifiant **caractérisé en ce qu'**il comprend un mélange pulvérulent selon l'une quelconque des revendications 5 à 7.

9. Utilisation du sucre gélifiant selon la revendication 8, pour la préparation de confitures, gelées ou marmelades.

10. Confiture, gelée ou marmelade **caractérisée en ce qu'**elle comporte du sucre gélifiant selon la revendication 8, et présente une viscosité inférieure à environ 6 cm/ 30 secondes, et variant notamment d'environ 3 à environ 6 cm/ 30 secondes, ladite viscosité étant mesurée à l'aide d'un appareil Bostwick.

11. Confiture, gelée ou marmelade selon la revendication 10, **caractérisée en ce qu'**elle comporte du sucre gélifiant selon la revendication 8, et des fruits, le rapport en poids entre lesdits fruits et ledit sucre gélifiant étant d'environ 1,4 à environ 0,7, et notamment d'environ 1.

## Claims

1. Use of a powdered mixture comprising:
- a sugar chosen from the group constituted by saccharose, fructose or their mixtures,
- a gelling agent chosen from the group constituted by carrageenans, xanthans, guar gum or their mixtures,
- and optionally a thickening agent such as carob seed flour,
for the preparation of a gel-forming sugar for jams, jellies or marmalades.

2. Use of a powdered mixture according to claim 1, **characterized in that** it comprises:
- a sugar chosen from the group constituted by saccharose, fructose or their mixtures,
- a gelling agent chosen from the group constituted by carrageenans, xanthans, guar gum or their mixtures.

3. Use of a powdered mixture according to claim 1 or claim 2, **characterized in that** the saccharose is chosen from the group constituted by white sugar, brown cane sugar or their mixtures.

4. Use according to any one of claims 1 to 3, **characterized in that** the powdered mixture comprises moreover a thickening agent such as carob seed flour.

5. Powdered mixture, **characterized in that** it comprises:
- a sugar chosen from the group constituted by saccharose, fructose or their mixtures,
- a gelling agent chosen from the group constituted by carrageenans, xanthans, guar gum or their mixtures,
- a thickening agent such as carob seed flour,
and in which the quantity of sugar varies from approximately 95% to approximately 99.8% by weight with respect to the total weight of the mixture, and is in particular approximately 99% by weight, and **in that** the quantity of gelling agent and optionally of the thickening agent, varies from approximately 0.2% to approximately 5% by weight with respect to the total weight of the mixture, and varies advantageously from approximately 0.2% to approximately 2%, and is in particular approximately 1% by weight.

6. Powdered mixture according to claim 5, **characterized in that** the saccharose is chosen from the group constituted by white sugar, brown cane sugar or their mixtures.

7. Powdered mixture according to any one of claims 5 or 6, **characterized in that** the quantity of gelling agent varies from approximately 30% to approximately 100% by weight with respect to the total weight of the gelling agent and the thickening agent, and is in particular approximately 80% by weight, and **in that** the quantity of the thickening agent varies from 0% to approximately 70% by weight with respect to the total weight of the gelling agent and the thickening agent, and is in particular approximately 20% in weight.

8. Gel-forming sugar **characterized in that** it comprises a powdered mixture according to any one of claims 5 to 7.

9. Use of the gel-forming sugar according to claim 8, for the preparation of jams, jellies or marmalades.

10. Jam, jelly or marmalade **characterized in that** it comprises gel-forming sugar according to claim 8, and has a viscosity less than approximately 6 cm/30 seconds, and varying in particular from approximately 3 to approximately 6 cm/30 seconds, said viscosity being measured using a Bostwick test apparatus.

11. Jam, jelly or marmalade according to claim 10, **characterized in that** it comprises gel-forming sugar according to claim 8 and fruits, the weight ratio between said fruits and said gel-forming sugar being approximately 1.4 to approximately 0.7, and in particular approximately 1.

## Patentansprüche

1. Verwendung einer pulverförmigen Mischung enthaltend:
- Zucker, ausgewählt aus der Gruppe, bestehend aus der Saccharose, der Fructose und ihren Mischungen,
- ein Geliermittel, ausgewählt aus der Gruppe, bestehend aus den Carraghenanen, Xanthanen, Guarkernmehl oder ihren Mischungen,
- und gegebenenfalls ein Verdickungsmittel, wie Johannisbrotkernmehl,
für die Herstellung eines Gelierzuckers für Konfitüren, Gelees oder Marmeladen.

2. Verwendung einer pulverförmigen Mischung gemäß Anspruch 1, **dadurch gekennzeichnet, dass** sie enthält:
- Zucker, ausgewählt aus der Gruppe, bestehend aus der Saccharose, der Fructose und ihren Mischungen,
- ein Geliermittel, ausgewählt aus der Gruppe, bestehend aus den Carraghenanen, den Xanthanen, dem Guarkernmehl oder ihren Mischungen.

3. Verwendung einer pulverförmigen Mischung gemäß Anspruch 1 oder Anspruch 2, **dadurch gekennzeichnet, dass** die Saccharose ausgewählt ist aus der Gruppe, bestehend aus dem Weißzucker, dem Rohrrohzucker oder ihren Mischungen.

4. Verwendung gemäß einem der Ansprüche 1 bis 3, **dadurch gekennzeichnet, dass** die pulverförmige Mischung unter anderem ein Verdickungsmittel, wie Johannisbrotkernmehl enthält.

5. Pulverförmige Mischung, **dadurch gekennzeichnet, dass** sie enthält:
- Zucker, ausgewählt aus der Gruppe, bestehend aus der Saccharose, der Fructose und ihren Mischungen,
- ein Geliermittel, ausgewählt aus der Gruppe, bestehend aus den Carraghenanen, den Xanthanen, dem Guarkernmehl und ihren Mischungen,
- ein Verdickungsmittel wie Johannisbrotkernmehl,
und in welcher die Menge des Zuckers zwischen ungefähr 95 und 99,8 Gew. % im Verhältnis zum Gesamtgewicht der Mischung variiert und insbesondere ungefähr 99 Gew. % ist, und dass die Menge des Geliermittels und gegebenenfalls des Verdickungsmittels von ungefähr 0,2 bis ungefähr 5 Gew. % im Verhältnis zum Gesamtgewicht der Mischung variiert und vorzugsweise zwischen ungefähr 0,2 und ungefähr 2 % variiert und insbesondere ungefähr 1 Gew. % ist.

6. Pulverförmige Mischung gemäß Anspruch 5, **dadurch gekennzeichnet, dass** die Saccherose ausgewählt ist aus der Gruppe, bestehend aus Weißzucker, Rohrrohzucker oder ihren Mischungen.

7. Pulverförmige Mischung gemäß einem der Ansprüche 5 oder 6, **dadurch gekennzeichnet, dass** die Menge des Geliermittels zwischen ungefähr 30 und ungefähr 100 Gew. % im Verhältnis zum Gesamtgewicht aus dem Geliermittel und dem Verdickungsmittel variiert, und dass sie insbesondere ungefähr 80 Gew. % ist, und dass die Menge des Verdickungsmittel von 0 bis ungefähr 70 Gew. % im Verhältnis zum Gesamtgewicht aus dem Geliermittel und dem Verdickungsmittel variiert und insbesondere ungefähr 20 Gew. % ist.

8. Gelierzucker, **dadurch gekennzeichnet, dass** er eine pulverförmige Mischung gemäß einem der Ansprüche 5 bis 7 enthält.

9. Verwendung eines Gelierzuckers gemäß Anspruch 8 für die Herstellung von Konfitüren, Geleen oder Marmeladen.

10. Konfitüre, Gelee oder Marmelade **dadurch gekennzeichnet, dass** sie bzw. es Gelierzucker gemäß Anspruch 8 umfasst, und eine Viskosität von unter ungefähr 6 cm pro 30 sec. und variierend insbesondere zwischen ungefähr 3 und ungefähr 6 cm pro 30 sec. aufweist, wobei die Viskosität mit Hilfe eines Bostwickgerätes gemessen wird.

11. Konfitüre, Gelee oder Marmelade gemäß Anspruch 10, **dadurch gekennzeichnet, dass** sie bzw. es Gelierzucker gemäß Anspruch 8, und Früchte umfasst, wobei das Gewichtsverhältnis zwischen den Früchten und dem Gelierzucker zwischen ungefähr 1,4 und ungefähr 0,7 liegt und insbesondere ungefähr 1 ist.
